# EUROPÄISCHE PATENTSCHRIFT

(11) **EP 3 619 446 B1**
(45) Veröffentlichungstag und Bekanntmachung des Hinweises auf die Patenterteilung: **10.03.2021**
(21) Anmeldenummer: 18721315.2
(22) Anmeldetag: 24.04.2018
(51) Int. Cl.: F16H 47/08, F16H 61/64, F16H 41/30

(54) **HYDRODYNAMISCHE MASCHINE, INSBESONDERE HYDRODYNAMISCHER WANDLER**
HYDRODYNAMIC MACHINE, IN PARTICULAR HYDRODYNAMIC CONVERTER
MACHINE HYDRODYNAMIQUE, NOTAMMENT CONVERTISSEUR HYDRODYNAMIQUE

(30) Priorität: 02.05.2017 DE 102017109310
(43) Veröffentlichungstag der Anmeldung: 11.03.2020
(73) Patentinhaber: Voith Patent GmbH, 89522 Heidenheim (DE)
(72) Erfinder: GORETZKI, Peter, 74599 Wallhausen (DE)
(74) Vertreter: Voith Patent GmbH - Patentabteilung
(86) Internationale Anmeldenummer: PCT/EP2018/060392
(87) Internationale Veröffentlichungsnummer: WO 2018/202463

(56) Entgegenhaltungen:
- DE-A1- 2 156 821
- DE-A1-102010 007 149
- DE-A1-102011 018 236
- US-A- 3 049 937

## Beschreibung

Die vorliegende Erfindung betrifft eine hydrodynamische Maschine, insbesondere einen hydrodynamischen Wandler, gemäß dem Oberbegriff von Anspruch 1.

Hydrodynamische Maschinen werden verwendet, um Antriebsleistung hydrodynamisch und verschleißfrei zu übertragen. Hierfür weisen hydrodynamische Maschinen wenigstens ein Pumpenrad und wenigstens ein Turbinenrad auf, die gemeinsam in einem mit Arbeitsmedium befüllbaren Arbeitsraum positioniert sind, sodass das Pumpenrad über eine hydrodynamische Kreislaufströmung des Arbeitsmediums im Arbeitsraum das Turbinenrad antreibt, wobei Drehmoment und Antriebsleistung übertragen werden. Somit wandelt das Pumpenrad mechanische Antriebsleistung in Strömungsenergie beziehungsweise Strömungsleistung um und das Turbinenrad wandelt Strömungsenergie beziehungsweise Strömungsleistung wieder in mechanische Antriebsleistung um.

Das Arbeitsmedium, insbesondere Öl, hat die zusätzliche Aufgabe, die im Arbeitsraum entstehende Wärme aus dem Arbeitsraum abzuführen. Um einen bestmöglichen Wirkungsgrad erreichen zu können, werden beispielsweise bei einem hydrodynamischen Wandler, insbesondere Gegenlaufwandler, dessen Pumpenrad und Turbinenrad in entgegengesetzte Richtungen zueinander umlaufen, möglichst hohe Austrittstemperaturen des Arbeitsmediums, insbesondere von ca. 95° C, angestrebt. Die Arbeitsmediumerwärmung in der hydrodynamischen Maschine ist proportional zur Verlustleistung und umgekehrt proportional zu der Arbeitsmediummenge, die von einem Arbeitsmediumzulauf in den Arbeitsraum und aus diesem heraus über einen Arbeitsmediumauslass abgeführt wird.

WO 2012/143123 A1 offenbart einen gattungsgemäßen hydrodynamischen Wandler, der als Gegenlaufwandler ausgeführt ist.

Ein solcher hydrodynamischer Wandler wird beispielsweise mittels einer Ölpumpe, allgemein Arbeitsmediumpumpe, mit Öl beziehungsweise Arbeitsmedium versorgt. Die Arbeitsmediumpumpe kann Bestandteil einer Arbeitsmediumversorgung, bei Öl Ölversorgung sein, bei welcher die Arbeitsmediumpumpe das Arbeitsmedium zumindest mittelbar oder unmittelbar aus einem Arbeitsmedium- oder Ölsumpf fördert und in den Arbeitsmediumzulauf des Wandlers speist. Der Wandler weist dabei einen erforderlichen Fülldruck auf, den die Arbeitsmediumpumpe entsprechend unter Leistungsaufnahme erzeugen muss. Bisher wird dabei vorgesehen, dass die Arbeitsmediumpumpe das Arbeitsmedium auf einen konstanten Druck fördert und dieses Arbeitsmedium über den Arbeitsmediumzulauf in den Arbeitsraum geleitet wird.

DE 10 2007 030 281 A1 offenbart eine hydrodynamische Kupplung mit einem Arbeitsraum und mit einem Nebenraum zur Aufnahme des nicht im Arbeitsraum befindlichen Arbeitsmediums. Der Arbeitsraum und der Nebenraum sind miteinander über einen Zulaufkanal und über einen Rücklaufkanal strömungsleitend beziehungsweise arbeitsmediumleitend verbunden. Somit kann sich eine Kreislaufströmung zwischen dem Arbeitsraum und dem Nebenraum einstellen. Das Arbeitsmedium strömt aus dem Nebenraum über den Zulaufkanal in den Arbeitsraum und aus dem Arbeitsraum über den Rücklaufkanal wieder zurück in den Nebenraum. Um den Füllungsgrad des Arbeitsraumes einzustellen, ist der Strömungsquerschnitt für das Arbeitsmedium im Zulaufkanal und/oder im Rücklaufkanal gezielt veränderbar. Der Strömungsquerschnitt für Arbeitsmedium im Zulaufkanal und/oder im Rücklaufkanal kann beispielsweise dadurch veränderbar sein, dass ein Regelventil im Zulaufkanal und/oder im Rücklaufkanal vorgesehen ist, das beispielsweise als Magnetventil ausgeführt ist. Eine alternative Ausgestaltung sieht ein getaktetes Auf-Zu-Ventil vor. Gemäß einer Ausführungsform ist das Ventil als Wegeventil mit zwei Stellungen und drei Anschlüssen ausgeführt, wobei in einer Stellung der Zulaufkanal gesperrt und der Ablaufkanal mit dem Nebenraum verbunden wird, sodass der Füllungsgrad des Arbeitsraumes reduziert wird, und in einer anderen Stellung das Ventil eine Strömung von Arbeitsmedium aus dem Rücklaufkanal und aus dem Nebenraum in den Arbeitstraum ermöglicht. Das Ventil ist als extern ansteuerbares Regelventil ausgeführt.

EP 0 427 589 A1 offenbart eine hydrodynamische Kupplung mit einem Zentrifugalventil, das bei Stillstand der hydrodynamischen Kupplung öffnet. Alternativ kann ein elektronisch gesteuertes Ventil vorgesehen sein.

US 2007/0292272 A1 offenbart einen Motor mit einer vertikal verlaufenden Kurbelwelle und einer vertikal verlaufenden Abtriebswelle unterhalb der Kurbelwelle. Ein Drehmomentwandler stellt eine Verbindung zwischen der Kurbelwelle und der Abtriebswelle her.

DE 2 156 821 A offenbart einen hydrodynamischen Wandler, der über ein Regelventil angesteuert wird, wobei das Regelventil an einem Arbeitsmediumzulauf und einem Arbeitsmediumauslass des hydrodynamischen Wandlers angeschlossen ist und einen Ventilkörper aufweist, der mit dem Arbeitsmediumdruck im Arbeitsmediumzulauf und im Arbeitsmediumauslass beaufschlagt ist. Das Regelventil ist im Zulauf des hydrodynamischen Wandlers positioniert und der Ventilkörper wird durch ein Vorspannelement in einer Schließrichtung des Regelventils beaufschlagt. Der Druck im Arbeitsmediumzulauf wird dadurch auf einen konstanten Wert geregelt, dass zunehmend mehr Arbeitsmedium über den Arbeitsmediumauslass abgeführt wird, indem das Regelventil immer weiter geöffnet wird.

DE 10 2010 007 149 A1 offenbart eine Füllsteuerungsvorrichtung für eine hydrodynamische Maschine, bei welcher ein Regelventil an einem Arbeitsmediumzulauf und einem Arbeitsmediumauslass angeschlossen ist, wobei der Druck des Arbeitsmediumzulaufes nur bei geöffnetem Regelventil auf einen Ventilkörper desselben wirkt und der Ventilkörper eine Aufteilung des durch einen Bypass und durch den Arbeitsmediumzulauf strömenden Arbeitsmediumstromes vornimmt.

DE 10 2006 031 814 A1 offenbart eine hydrodynamische Maschine, insbesondere eine hydrodynamische Kupplung, bei welcher im Arbeitsmediumeinlass ein Einlassventil vorgesehen ist, das zwei Schaltstellungen eines Ventilkörpers aufweist, nämlich eine erste Schaltstellung, in welcher das Einlassventil einen ersten Strömungsquerschnitt für das Arbeitsmedium freigibt, und ferner eine zweite Schaltstellung, in welcher das Einlassventil einen zweiten Strömungsquerschnitt für das Arbeitsmedium freigibt, wobei der zweite Strömungsquerschnitt kleiner als der erste Strömungsquerschnitt ist. Die jeweilige Schaltstellung des Ventilkörpers wird automatisch in Abhängigkeit des Druckes des Arbeitsmediums im oder am Einlassventil und/oder in Abhängigkeit der Druckdifferenz des Arbeitsmediums über dem Einlassventil, also zwischen einem Arbeitsmediumzulauf und einem Arbeitsmediumablauf des Einlassventils eingestellt. Damit ist die hydrodynamische Kupplung in Ölsystemen mit variierendem Öldruck verwendbar, wobei das Einlassventil Öldruckschwankungen derart ausgleicht, dass die hydrodynamische Kupplung mehr oder minder mit demselben Arbeitsmediumdruck beaufschlagt wird. Um nicht den gesamten in die hydrodynamische Kupplung einfließenden Arbeitsmediumstrom entsprechend regeln zu müssen, kann um das Einlassventil herum ein Bypass vorgesehen sein, über welchen stets ein Teil des Arbeitsmediums in den Arbeitsmediumzulauf der hydrodynamischen Kupplung geleitet wird. Somit wird auch gemäß DE 10 2006 031 814 A1 sichergestellt, dass die hydrodynamische Maschine zumindest weitgehend in allen Betriebsbereichen mit demselben Arbeitsmediumdruck beaufschlagt wird.

Obwohl die genannten hydrodynamischen Maschinen bisher in der Praxis zufriedenstellend arbeiten, besteht ein Bedarf, den Wirkungsgrad zu steigern.

Der vorliegenden Erfindung liegt die Aufgabe zugrunde, eine hydrodynamische Maschine anzugeben, die hinsichtlich des Wirkungsgrades verbessert ist.

Die erfindungsgemäße Aufgabe wird durch eine hydrodynamische Maschine mit den Merkmalen von Anspruch 1 gelöst. In den abhängigen Ansprüchen werden vorteilhafte und besonders zweckmäßige Ausgestaltungen der Erfindung angegeben.

Der vorliegenden Erfindung liegt zum einen die Erkenntnis zugrunde, dass die bisherige Versorgung der hydrodynamischen Maschine, insbesondere eines hydrodynamischen Wandlers, der beispielsweise als Gegenlaufwandler und insbesondere als Stellwandler ausgeführt ist, mit einem konstanten Fülldruck zu Nachteilen hinsichtlich des Wirkungsgrades führt. So wurde festgestellt, dass der erforderliche Fülldruck in Abhängigkeit der Drehzahl, insbesondere der Abtriebsdrehzahl, das heißt der Drehzahl des Turbinenrades, und/oder in Abhängigkeit des Abtriebsmomentes, das heißt des am Turbinenrad anliegenden Drehmomentes, variiert. Bisher wird der Fülldruck auf den ungünstigsten Betriebspunkt eingestellt und im gesamten Betriebskennfeld nahezu konstant gehalten. Dementsprechend ist die Aufnahmeleistung einer Arbeitsmediumpumpe, die sich insbesondere proportional zum Differenzdruck über der Arbeitsmediumpumpe verhält, im gesamten Kennfeld vergleichsweise hoch. Darüber hinaus führt ein in einem bestimmten Betriebszustand unnötig hoher Fülldruck zu einer unnötig hohen Leckage von Arbeitsmedium aus der hydrodynamischen Maschine, beispielsweise über deren Dichtungen, die insbesondere als berührungslose Dichtungen ausgeführt sind. Schließlich gelangt in einem weiten Bereich des Kennfeldes der hydrodynamischen Maschine mehr Arbeitsmedium in den Arbeitsraum und aus diesem heraus, als notwendig ist, wodurch sich vergleichsweise geringere Austrittstemperaturen als bei einer kleineren Arbeitsmediumdurchströmung einstellen. Um die bestmöglichen Wirkungsgrade zu erreichen, werden jedoch möglichst hohe Austrittstemperaturen, beispielsweise von 90° C, 95° C oder mehr angestrebt, also eine entsprechende Temperatur des Arbeitsmediums im Arbeitsmediumauslass der hydrodynamischen Maschine.

Insbesondere, wenn die hydrodynamische Maschine als Verstellwandler ausgeführt ist, bei welchem das Verhältnis vom am Pumpenrad anliegenden Drehmoment und am Turbinenrad anliegenden Drehmoment variabel und gezielt einstellbar beziehungsweise veränderbar ist, indem ein entsprechendes Stellglied vorgesehen ist, ist der erforderliche Fülldruck bei minimalen Abtriebsdrehzahlen und minimalem Abtriebsmoment am höchsten, das heißt in einem Betriebszustand, bei welchem das Turbinenrad mit vergleichsweise geringer Drehzahl umläuft und am Turbinenrad ein vergleichsweise geringes Drehmoment, beispielsweise von weniger als die Hälfte des Drehmomentes am Pumpenrad anliegt. Im Nennpunkt des hydrodynamischen Wandlers, bei welchem insbesondere die maximale Abtriebsdrehzahl und das maximale Abtriebsmoment am Turbinenrad anliegt, ist der erforderliche Fülldruck am niedrigsten. Der dynamische Druck, also die Druckerhöhung im Arbeitsraum des hydrodynamischen Wandlers durch das Pumpenrad ist im Nennpunkt am höchsten und bei minimaler Abtriebsdrehzahl am geringsten. Hierdurch ergeben sich bei einem konstanten Fülldruck im Nennpunkt hohe Leckagen und bei minimaler Abtriebsdrehzahl geringe Leckagen.

Als Stellglied des Wandlers kann das Pumpenrad und/oder ein Leitrad wirken, indem nämlich die Schaufeln des Pumpenrades und/oder die Schaufeln des Leitrades gegenüber der Strömung des Arbeitsmediums im Arbeitsraum, also gegenüber der Strömung im Arbeitsmediumkreislauf im Arbeitsraum, verstellbar sind, indem sie mehr oder minder gegen die Strömungsrichtung anstellbar sind.

Gemäß der Erfindung ist daher ein Regelventil vorgesehen, das den Zulaufdruck entsprechend den Anforderungen der hydrodynamischen Maschine im jeweiligen Betriebspunkt einstellt. Hierfür wird in Kennfeldbereichen mit einem niedrigen erforderlichen Zulaufdruck weniger druckbeaufschlagtes Arbeitsmedium über den Arbeitsmediumzulauf in den Arbeitsraum und aus dem Arbeitsmediumauslass aus dem Arbeitsraum geleitet als in Kennfeldbereichen mit einem vergleichsweise höheren erforderlichen Zulaufdruck. Damit kann zum einen ein Betriebspunkt beziehungsweise Nennbetriebspunkt, in welchem der Pumpenwirkungsgrad maximal ist, einer insbesondere mechanisch angetriebenen volumetrischen Arbeitsmediumpumpe zu niedrigeren Differenzdrücken über der Pumpe verschoben werden, was eine vergleichsweise niedrigere Pumpenaufnahmeleistung zur Folge hat. Zum anderen gelangt weniger Arbeitsmedium, insbesondere Öl, in die hydrodynamische Maschine, sodass weniger Arbeitsmedium im Arbeitsraum beschleunigt werden muss. Ferner steigt die Temperatur des aus dem Arbeitsraum austretenden Arbeitsmediums, also des Arbeitsmediums im Arbeitsmediumauslass, was einen positiven Effekt auf den Wirkungsgrad hat.

Im Einzelnen weist eine hydrodynamische Maschine, die insbesondere als hydrodynamischer Wandler ausgeführt ist, beispielsweise als Gegenlaufwandler, einen mit einem Arbeitsmedium befüllbaren Arbeitsraum auf, in welchem wenigstens ein beschaufeltes Pumpenrad, insbesondere genau ein einziges beschaufeltes Pumpenrad, und wenigstens ein beschaufeltes Turbinenrad, insbesondere ein einziges beschaufeltes Turbinenrad, angeordnet sind, um Drehmoment und/oder Antriebsleistung hydrodynamisch vom Pumpenrad auf das Turbinenrad zu übertragen.

Die hydrodynamische Maschine weist einen Arbeitsmediumzulauf zum Zuführen von Arbeitsmedium in den Arbeitsraum und einen Arbeitsmediumauslass zum Abführen von Arbeitsmedium aus dem Arbeitsraum auf.

Erfindungsgemäß ist ein Regelventil vorgesehen, das im Arbeitsmediumzulauf oder in einem Bypass für Arbeitsmedium, der vom Arbeitsmediumzulauf abzweigt, vorgesehen ist. Der Bypass mündet beispielsweise zumindest mittelbar oder direkt in einem Arbeitsmediumsumpf, insbesondere Ölsumpf, wenn als Arbeitsmedium Öl verwendet wird.

Mit dem Regelventil ist die in den Arbeitsraum einströmende Arbeitsmediummenge durch Einstellen eines Strömungsquerschnittes für durch das Regelventil strömendes Arbeitsmedium veränderbar. Dementsprechend kann bei einem vergleichsweise größeren Strömungsquerschnitt mehr Arbeitsmedium durch das Regelventil strömen als bei einem vergleichsweise kleineren Strömungsquerschnitt. Wenn dann das Regelventil in dem Bypass vorgesehen ist, strömt also bei dem vergleichsweise größeren Strömungsquerschnitt vergleichsweise mehr Arbeitsmedium durch den Bypass am Arbeitsraum vorbei, sodass die durch den Arbeitsraum geleitete Arbeitsmediummenge vergleichsweise geringer ist.

Erfindungsgemäß ist das Regelventil derart am Arbeitsmediumzulauf und/oder Arbeitsmediumauslass angeschlossen und betätigt, dass der Strömungsquerschnitt des Regelventils in Abhängigkeit des Arbeitsmediumdruckes im Arbeitsmediumzulauf und in Abhängigkeit des Arbeitsmediumdruckes im Arbeitsmediumauslass variabel eingestellt wird.

Beispielsweise ist das Regelventil sowohl am Arbeitsmediumzulauf als auch am Arbeitsmediumauslass angeschlossen und mit dem Arbeitsmediumdruck beaufschlagt, um die gewünschte Strömungsquerschnitteinstellung zu erreichen. Somit erfolgt die Änderung beziehungsweise Einstellung des Strömungsquerschnitts des Regelventils durch die Beaufschlagung des Regelventils mit dem Arbeitsmediumdruck im Arbeitsmediumzulauf und dem Arbeitsmediumdruck im Arbeitsmediumauslass. Damit kann insbesondere auf eine elektrische oder elektronische Ansteuerung des Regelventils verzichtet werden und das Regelventil ausschließlich mechanisch beziehungsweise durch Arbeitsmediumdruck angesteuert werden.

Gemäß einer Ausführungsform der Erfindung ist das Regelventil in dem Bypass angeordnet und weist einen mittels einem Vorspannelement vorgespannten Ventilkörper auf, der mit einem Ventilsitz zur Begrenzung und Einstellung des Strömungsquerschnittes zusammenarbeitet. Das Vorspannelement ist derart im Regelventil vorgesehen, dass es in einer Schließrichtung des Regelventils auf den Ventilkörper wirkt. Wenn das Regelventil im Arbeitsmediumzulauf vorgesehen ist, kann das Vorspannelement im Sinne eines Öffnens auf den Ventilkörper wirken.

Der Ventilkörper kann nun entgegen der Vorspannkraft des Vorspannelementes in Abhängigkeit des Arbeitsmediumdruckes im Arbeitsmediumzulauf und in Abhängigkeit des Arbeitsmediumdruckes im Arbeitsmediumauslass kraftbeaufschlagt werden.

Die Vorspannkraft des Vorspannelementes ist bevorzugt, zumindest vor der Inbetriebnahme oder Wiederinbetriebnahme der hydrodynamischen Maschine, variabel einstellbar. Beispielsweise ist ein verstellbarer Aktuator, zum Beispiel in Form einer Einstellschraube oder dergleichen, vorgesehen, der betätigbar ist, insbesondere manuell betätigbar ist, um die Vorspannkraft des Vorspannelementes zu verändern.

Gemäß einer Ausführungsform der Erfindung wirkt die Vorspannkraft entgegen sowohl einer Kraft, die auf den Ventilkörper in Abhängigkeit des Arbeitsmediumdruckes im Arbeitsmediumzulauf aufgebracht wird, als auch entgegen einer Kraft, die auf den Ventilkörper in Abhängigkeit des Arbeitsmediumdruckes im Arbeitsmediumauslass aufgebracht wird.

Insbesondere weist das Regelventil einen ersten Arbeitsmediumanschluss, einen zweiten Arbeitsmediumanschluss und einen Arbeitsmediumablauf auf. Der erste Arbeitsmediumanschluss ist arbeitsmediumleitend mit dem Arbeitsmediumzulauf verbunden, der zweite Arbeitsmediumanschluss ist arbeitsmediumleitend mit dem Arbeitsmediumauslass verbunden und der erste Arbeitsmediumanschluss ist über den veränderbaren Strömungsquerschnitt arbeitsmediumleitend mit dem Arbeitsmediumablauf verbunden. Der erste Arbeitsmediumanschluss und der zweite Arbeitsmediumanschluss sind jeweils mit einer eigenen oder mit einer gemeinsamen Wirkfläche am Ventilkörper arbeitsmediumleitend verbunden, um den Ventilkörper entgegen der Vorspannkraft des Vorspannelementes druckzubeaufschlagen.

Insbesondere ist das Regelventil als Kolbenschieberventil ausgeführt, weist demnach einen Kolben als Ventilkörper auf.

Das Vorspannelement kann beispielsweise als Druckfeder ausgeführt sein, insbesondere als Spiraldruckfeder.

Beispielsweise greift die Druckfeder auf einer ersten Seite des als Kolben ausgeführten Ventilkörpers an und die beiden Wirkflächen oder die gemeinsame Wirkfläche ist/sind auf einer hierzu entgegengesetzten Seite des Ventilkörpers vorgesehen.

Das Flächenverhältnis der beiden Wirkflächen zueinander kann beispielsweise wie folgt ausgeführt sein: Das Verhältnis der Wirkfläche, mit welcher der Arbeitsmediumzulauf verbunden ist, zu der Wirkfläche, mit welcher der Arbeitsmediumauslass verbunden ist, liegt vorzugsweise im Bereich von 2,5 bis 4,5.

Das Vorspannelement kann beispielsweise eine Vorspannkraft zwischen 1000 und 20.000 Newton aufweisen, abhängig von Antriebsdrehzahl, Wandlergröße und Ventilparameter (Durchmesser). Gemäß einer Ausführungsform der Erfindung beträgt die Vorspannkraft des Vorspannelementes das 1,1-fache bis 2,0-fache im Auslegungspunkt beziehungsweise des Einstellwertes des Produktes des maximalen Zulaufdrucks der hydrodynamischen Maschine oder des Druckes im Arbeitsmediumzulauf der hydrodynamischen Maschine im Nennbetriebspunkt multipliziert mit der Wirkfläche, die arbeitsmediumleitend mit dem Arbeitsmediumzulauf verbunden ist.

Im Arbeitsmediumablauf des Regelventils kann eine Drosselblende vorgesehen sein, um die maximal abströmende Arbeitsmediummenge zu begrenzen. Eine solche Blende ist dann vorteilhaft unter Berücksichtigung der Verlustleistung der hydrodynamischen Maschine innerhalb des Kennfeldes und der maximalen Pumpenfördermenge einer Arbeitsmediumpumpe hinsichtlich zulässiger Temperaturen auszulegen und kann eine reine Schutzfunktion gegen Überhitzung der hydrodynamischen Maschine aufweisen. Anstelle einer Drosselblende mit konstantem Strömungsquerschnitt könnte prinzipiell auch eine einstellbare, insbesondere manuell einstellbare, Drossel vorgesehen sein.

Der erste Arbeitsmediumanschluss des Regelventils weist insbesondere einen größeren Strömungsquerschnitt als der zweite Arbeitsmediumanschluss auf. Insbesondere strömt das Arbeitsmedium vom ersten Arbeitsmediumanschluss durch den veränderbaren Strömungsquerschnitt des Regelventils zum Arbeitsmediumablauf, wohingegen der zweite Arbeitsmediumanschluss nur zur Druckübertragung dient und dem zweiten Arbeitsmediumanschluss entsprechend kein Ablauf zugeordnet ist. Vielmehr kann sich im zweiten Arbeitsmediumanschluss nur ein statischer Druck des Arbeitsmediums aufbauen.

Das Vorspannelement ist insbesondere derart ausgelegt beziehungsweise vorgespannt, dass die elastische Kraft des Vorspannelementes und die Druckkraft des über die beiden Arbeitsmediumanschlüsse zugeführten wirksamen Arbeitsmediumdruckes bei niedriger Abtriebsdrehzahl der hydrodynamischen Maschine im Gleichgewicht sind. Das bedeutet, über die Vorspannkraft wird der maximal erforderliche Fülldruck eingestellt. In diesem Betriebspunkt der hydrodynamischen Maschine ist der Auslassdruck insbesondere kleiner als der Zulaufdruck.

Ist der Auslassdruck der hydrodynamischen Maschine multipliziert mit der Wirkfläche, über welche das Arbeitsmedium des zweiten Arbeitsmediumanschlusses wirkt, addiert zu dem Fülldruck (Zulaufdruck) der hydrodynamischen Maschine multipliziert mit entsprechend der Wirkfläche, auf welche der Arbeitsmediumdruck aus dem ersten Arbeitsmediumanschluss wirkt, größer als die eingestellte Vorspannkraft des Vorspannelementes, so öffnet das Regelventil und Arbeitsmedium strömt am Arbeitsraum vorbei, insbesondere in den Arbeitsmediumsumpf. Infolge dessen sinkt der Fülldruck und damit der Systemdruck vor der hydrodynamischen Maschine so lange ab, bis sich ein Gleichgewicht einstellt.

Die Erfindung ist besonders vorteilhaft bei einer hydrodynamischen Maschine in Form eines Gegenlaufwandlers, insbesondere kombiniert mit einer mechanisch angetriebenen volumetrischen Arbeitsmediumpumpe.

Ein erfindungsgemäßer Antriebsstrang weist dementsprechend eine Arbeitsmediumpumpe auf, welche mit ihrer Druckseite arbeitsmediumleitend am Arbeitsmediumzulauf der hydrodynamischen Maschine angeschlossen ist, um die hydrodynamische Maschine, insbesondere den hydrodynamischen Wandler, mit druckbeaufschlagtem Arbeitsmedium zu versorgen. Die Arbeitsmediumpumpe weist ferner eine Saugseite auf, die unmittelbar oder mittelbar an einem Arbeitsmediumsumpf, insbesondere Ölsumpf, angeschlossen ist. Der Bypass mündet unmittelbar oder mittelbar im Arbeitsmediumsumpf.

Durch die Erfindung kann eine niedrigere Pumpenaufnahmeleistung als bisher durch den reduzierten Differenzdruck über der Arbeitsmediumpumpe mit einer günstigen Verschiebung des Betriebspunktes der Pumpe erreicht werden. Höhere Arbeitsmediumtemperaturen innerhalb der hydrodynamischen Maschine können zu geringeren Ölviskositäten führen, wodurch die hydrodynamischen Eigenschaften verbessert werden und der Wirkungsgrad gesteigert wird. Die geringere Arbeitsmediummenge, die innerhalb des Arbeitsraums durch das Pumpenrad beschleunigt werden muss, wirkt sich ebenfalls günstig auf den Wirkungsgrad der hydrodynamischen Maschine aus.

Beispielsweise kann gemäß einer Ausführungsform der vorliegenden Erfindung die hydrodynamische Maschine, insbesondere der hydrodynamische Wandler, in einem sogenannten hydrodynamischen Leistungszweig eines Getriebes vorgesehen sein, wobei das Getriebe ferner einen rein mechanischen Leistungszweig aufweist, der hinsichtlich der Antriebsleistungsübertragung von einem Getriebeeingang zu einem Getriebeausgang parallel zu dem hydrodynamischen Zweig angeordnet ist. Bei dem Getriebeeingang kann es sich beispielsweise um eine Eingangswelle handeln, die zumindest im Wesentlichen mit konstanter Drehzahl umläuft, wohingegen eine den Getriebeausgang bildende Ausgangswelle mit variabler Drehzahl antreibbar ist. Dabei ist der Begriff Welle breit zu verstehen, sodass es sich hier nicht um eine zylindrische Vollwelle oder Hohlwelle handeln muss, sondern jedes geeignete Element, das umlaufen kann, die entsprechende Welle ausbilden kann.

Beispielweise ist in dem Getriebe ein als Planetengetriebe ausgebildetes Überlagerungsgetriebe vorgesehen, umfassend ein Hohlrad, ein Sonnenrad sowie einen Planetenträger mit einem oder mehreren Planeten. Der hydrodynamische Wandler kann insbesondere als Gegenlaufwandler ausgebildet sein, und die Eingangswelle des Getriebes kann mit einem Pumpenrad des hydrodynamischen Wandlers und einem ersten Element des Planetengetriebes direkt verbunden sein. Das Turbinenrad des hydrodynamischen Wandlers ist dann bevorzugt direkt mit einem zweiten Element des Planetengetriebes verbunden und die Ausgangswelle des Getriebes ist mit einem dritten Element des Planetengetriebes verbunden. Das erste Element des Planetengetriebes ist beispielsweise der Planetenträger, das zweite Element das Sonnenrad des Planetengetriebes und das dritte Element das Hohlrad des Planetengetriebes.

Bevorzugt ist ein einziges Planetengetriebe in dem Getriebe vorgesehen. In Richtung des Antriebsleistungsflusses vom Planetengetriebe zu einer dem Getriebe nachgeschalteten Arbeitsmaschine kann insbesondere eine Übersetzung, beispielsweise ins Schnelle, vorgesehen sein.

Das Turbinenrad des hydrodynamischen Wandlers ist bevorzugt über eine Hohlwelle mit dem Sonnenrad des Planetengetriebes verbunden und eine durch die Hohlwelle verlaufende Eingangswelle des Getriebes, die von einer Antriebsmaschine angetrieben werden kann, ist beispielsweise auf der dem hydrodynamischen Wandler abgewandten Seite des Planetengetriebes mit dem Planetenträger verbunden.

Gemäß einer Ausführungsform ist das Hohlrad auf der dem hydrodynamischen Wandler abgewandten Seite des Planetengetriebes zumindest mittelbar mit der Ausgangswelle des Getriebes verbunden.

Das Hohlrad, die Planeten und das Sonnenrad können einfach schrägverzahnt ausgeführt sein.

Die Antriebsmaschine kann beispielsweise als Elektromotor ausgebildet sein.

Bei der Arbeitsmaschine handelt es sich beispielsweise um eine Fördereinrichtung für ein Fluid, beispielsweise einen Verdichter, eine Pumpe oder eine Kreiselpumpe.

Die Erfindung soll nachfolgend anhand von Ausführungsbeispielen und den Figuren exemplarisch beschrieben werden.

Es zeigen:
- Figur 1: ein Ausführungsbeispiel einer hydrodynamischen Maschine in Form eines hydrodynamischen Wandlers mit einem erfindungsgemäßen Regelventil;
- Figur 2: eine schematische Getriebedarstellung eines Ausführungsbeispiels für ein Getriebe mit einer erfindungsgemäßen hydrodynamischen Maschine;
- Figur 3: eine gegenüber der Figur 2 abgewandelte Ausführungsform.

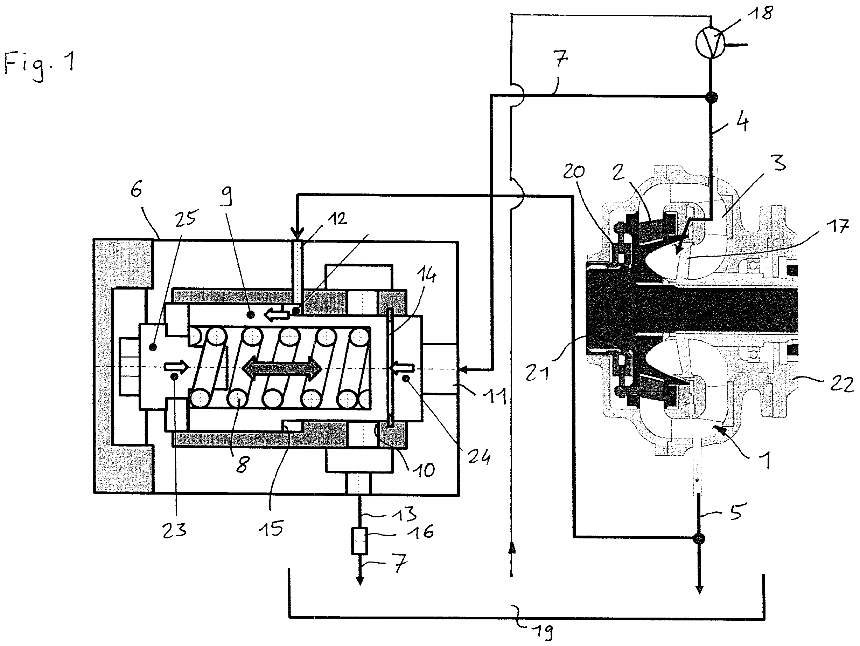

In der Figur 1 ist eine hydrodynamische Maschine exemplarisch dargestellt, die in Form eines hydrodynamischen Wandlers, hier Stellwandlers, insbesondere Gegenlaufwandlers, ausgeführt ist. Im Arbeitsraum 1 ist ein beschaufeltes Pumpenrad 2 vorgesehen, dessen Pumpenschaufeln über eine Achse quer oder winklig zur Strömungsrichtung des Arbeitsmediums in einem Arbeitsmediumkreislauf im Arbeitsraum 1 verstellbar sind. Die Verstellung erfolgt beispielsweise über einen Verstellring 20.

Im Arbeitsraum 1 sind ferner in Strömungsrichtung des Arbeitsmediums hinter dem Pumpenrad 2 beziehungsweise dessen Schaufeln die Schaufeln eines Turbinenrades 3 vorgesehen, gefolgt von einem Leitrad 17 beziehungsweise dessen Schaufeln, wobei das Leitrad insbesondere stationär ist.

Arbeitsmedium wird in den Arbeitsraum 1 über den Arbeitsmediumzulauf 4 geleitet und aus dem Arbeitsraum 1 über den Arbeitsmediumauslass 5 abgeführt.

Die hydrodynamische Maschine weist eine Antriebswelle 21 auf, die mechanisch mit dem Pumpenrad 2 verbunden ist, sowie eine Abtriebswelle 22, die mechanisch mit dem Turbinenrad 3 verbunden ist. Die Antriebswelle 21 und/oder die Abtriebswelle 22 können prinzipiell als Vollwelle oder als jede geeignete Art von Hohlwelle ausgeführt sein.

Vom Arbeitsmediumzulauf 4 zweigt ein Bypass 7 ab, der in einem Arbeitsmediumsumpf 19 mündet. Auch der Arbeitsmediumauslass 5 kann in dem Arbeitsmediumsumpf 19 münden.

Im Bypass 7 ist ein Regelventil 6 vorgesehen, das einen mit einem Vorspannelement 8 vorgespannten Ventilkörper 9 aufweist. Die Kraft des Vorspannelementes 8 wirkt wie durch den mit 23 bezeichneten Pfeil angedeutet.

Entgegengesetzt zur Kraft des Vorspannelementes 8 wirkt auf den Ventilkörper 9 ein Druck des Arbeitsmediums, das einem ersten Arbeitsmediumanschluss 11 des Regelventils 6 aus dem Arbeitsmediumzulauf 4 zugeführt wird. Dieser Druck wirkt auf eine erste Wirkfläche 14 des Ventilkörpers 9, der zusammen mit einem Ventilsitz 10 den Strömungsquerschnitt des Regelventils einstellt.

Der Ventilkörper 9 weist ferner eine zweite Wirkfläche 15 auf, auf welche der Druck des über den zweiten Arbeitsmediumanschluss 12 zugeführten Arbeitsmediums aus dem Arbeitsmediumauslass 5 wirkt. Auch die hieraus resultierende Kraft wirkt entgegen der Vorspannkraft des Vorspannelementes 8, zusammen mit der Kraft des auf die erste Wirkfläche 14 wirkenden Arbeitsmediumdruckes, wobei die resultierende Kraft durch den Pfeil 24 gezeigt ist.

Die Vorspannkraft des Vorspannelementes 8 ist im gezeigten Ausführungsbeispiel durch eine Einstellschraube 25 variabel einstellbar.

Im Arbeitsmediumablauf 13 des Regelventils 6, aus welchem das über den ersten Arbeitsmediumanschluss 11 zugeführte Arbeitsmedium abströmt, ist eine Drosselblende 16 vorgesehen, um die Menge des durch das Regelventil 6 und damit am Arbeitsraum 1 vorbeiströmenden Arbeitsmediums zu begrenzen.

Das Arbeitsmedium wird mittels der Arbeitsmediumpumpe 18 zumindest mittelbar aus dem Ölsumpf 19 in die hydrodynamische Maschine gefördert. Aufgrund dessen, dass nicht stets die gesamte Arbeitsmediummenge durch die hydrodynamische Maschine gefördert werden muss und der Arbeitsmediumdruck im Arbeitsmediumzulauf 4 auf die minimal notwendige Höhe reduziert werden kann, ist die Energieaufnahme beziehungsweise Leistungsaufnahme der Arbeitsmediumpumpe 18 reduziert, zumindest betrachtet über den gesamten Betriebsbereich, in welchem die Arbeitsmediumpumpe 18 arbeitet.

Im gezeigten Ausführungsbeispiel wird die erste Wirkfläche 14 durch eine Kreisfläche gebildet, wohingegen die zweite Wirkfläche 15 durch eine Ringfläche gebildet wird. Dies ist jedoch nicht zwingend.

Ferner ist das Regelventil 6 als Kolbenschieberventil dargestellt, wobei der Kolben mit Bohrungen in einem Gehäuse zusammenarbeitet, welches den Ventilsitz 10 ausbildet. Auch hier könnte jedoch eine andere Ausführungsform gewählt werden.

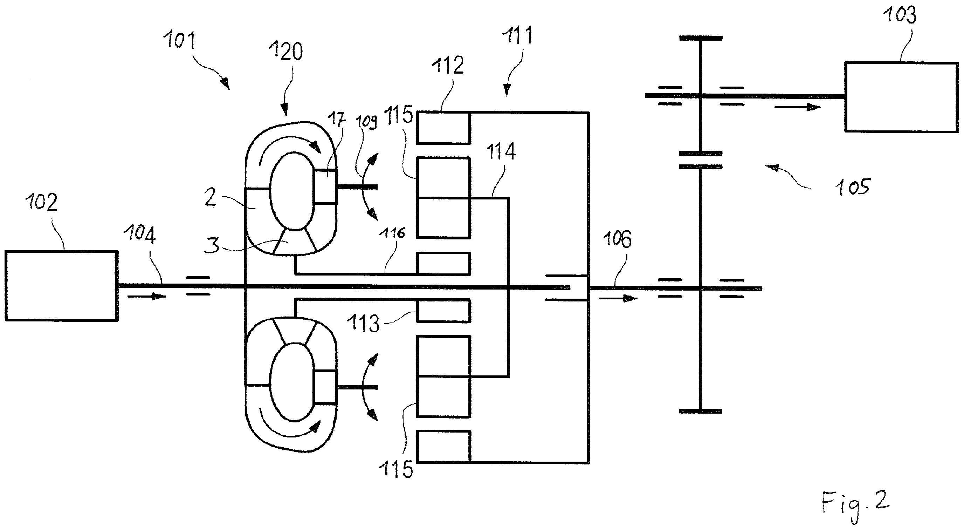

In der Figur 2 ist eine Vorrichtung 101 zur Kraftübertragung dargestellt, welche ein Antriebsaggregat 102 und eine Arbeitsmaschine 103 miteinander verbindet. Die Vorrichtung 101 wird durch ein Getriebe mit einem hydrodynamischen Leistungszweig und einem parallel hierzu vorgesehenen rein mechanischen Leistungszweig gebildet. Das Antriebsaggregat 102 kann dabei insbesondere als Motor, besonders bevorzugt als Elektromotor ausgebildet sein. Dies liefert bei dem hier dargestellten Aufbau typischerweise eine konstante Drehzahl, mit welcher es eine direkt oder gegebenenfalls auch über eine nicht dargestellte Getriebestufe mit diesem verbundene Eingangswelle 104 antreibt. Über die Vorrichtung 101 wird dann die Arbeitsmaschine 103 angetrieben, welche als Arbeitsmaschine 103 mit variabler Drehzahl ausgebildet ist. Die Arbeitsmaschine 103 kann insbesondere ein Verdichter beziehungsweise ein Kompressor, eine Kreiselpumpe oder Ähnliches sein. Sie ist in dem hier dargestellten Ausführungsbeispiel über ein Stirnradgetriebe 105 mittelbar mit einer Ausgangswelle 106 verbunden. Eine Verbindung über ein Planetengetriebe, Kegelradgetriebe oder Ähnliches wäre ebenso denkbar. Die Vorrichtung 101 zur Kraftübertragung umfasst nun einen hydrodynamischen Gegenlaufwandler 120, dessen Pumpenrad 2 unmittelbar mit der Eingangswelle 104 verbunden ist. Wie für einen Gegenlaufwandler 120 typisch, entsteht eine Strömung des Arbeitsmediums von dem Pumpenrad 2 über ein Leitrad 17, welches, wie durch den Pfeil 109 gekennzeichnet, verstellbar ausgeführt ist, auf ein Turbinenrad 3. Parallel dazu wird die Leistung über die Eingangswelle 104 mechanisch direkt übertragen. Die beiden Leistungszweige werden dann durch ein Planetengetriebe 111 wieder zusammengeführt und gelangen gemeinsam in den Bereich der Ausgangswelle 106.

Das Planetengetriebe 111 weist ein Hohlrad 112, ein Sonnenrad 113 sowie mehrere auf einem Planetenträger 114 angeordnete Planeten 115 auf. Bei dem hier dargestellten Aufbau wird nun das Turbinenrad 3 des hydrodynamischen Gegenlaufwandlers 120 über eine Hohlwelle 116 mit dem Sonnenrad 113 des Planetengetriebes 111 direkt verbunden. Durch die Hohlwelle 116 hindurch ist die Eingangswelle 114 auf der dem Gegenlaufwandler 120 abgewandten Seite des Planetengetriebes 111 mit dem Planetenträger 114 und damit mit den einzelnen umlaufenden Planeten 115 verbunden. Die Ausgangswelle 106 ist wiederum mit dem Hohlrad 112 des Planetengetriebes 111 verbunden.

Entsprechend der gewünschten Drehzahl oder Ausgangswelle 106 wird nun durch eine Einstellung des Leitrads 17 und/oder des Füllgrads des hydrodynamischen Gegenlaufwandlers 120 mit Arbeitsmedium eine entsprechende Leistungsübertragung in dem hydrodynamischen Leistungszweig und damit von der Eingangswelle 114 auf das Sonnenrad 113 erreicht. Diese über den hydrodynamischen Leistungszweig übertragene Leistung wird dann mit dem über die Planetenträger 114 eingetragenen Hauptteil der Leistung, welche direkt mechanisch übertragen wird, summiert und gelangt als gemeinsame Leistung über das Hohlrad 112 zur Ausgangswelle 116. In dem hier dargestellten Fall wird die Arbeitsmaschine 113 dann über das Stirnradgetriebe 115 mit konstanter Übersetzung angetrieben. Je nach gewünschter momentaner Drehzahl im Bereich der Arbeitsmaschine 113 wird der hydrodynamische Gegenlaufwandler 120 entsprechend verstellt, indem das Leitrad 17 verstellt und/oder die Menge an Arbeitsmedium in dem hydrodynamischen Gegenlaufwandler 120 variiert wird.

Dadurch wird eine sehr gute Regelbarkeit der Ausgangsdrehzahl auf den gewünschten Drehzahlwert erzielt.

Der Aufbau lässt sich dabei außerordentlich kompakt und entsprechend leicht realisieren, da kein Standgetriebe benötigt wird, keine Koppelhülse verwendet werden muss und da aufgrund der sehr günstigen Drehzahlen ein vergleichsweise kleines Planetengetriebe 111 eingesetzt werden kann. Aufgrund der Möglichkeiten zur Lagerung insbesondere der Eingangswelle 114 auf der Ausgangswelle 116 entsteht ein Aufbau, welcher keine oder keine nennenswerten Kräfte in axialer Richtung auf die einzelnen Elemente 112, 113, 115 des Planetengetriebes 111 verursacht. Damit ist es möglich, die einzelnen Elemente 112, 113, 115 des Planetengetriebes 111 in einfacher Schrägverzahnung auszuführen, sodass diese nicht nur aufgrund ihrer Baugröße, sondern auch aufgrund ihrer Bauart vergleichsweise einfach und kostengünstig realisiert werden können.

Der Aufbau ist insgesamt sehr kompakt, leicht und kann aufgrund der vergleichsweise geringen Anzahl an Einzelelementen einfach und kostengünstig hergestellt und montiert werden.

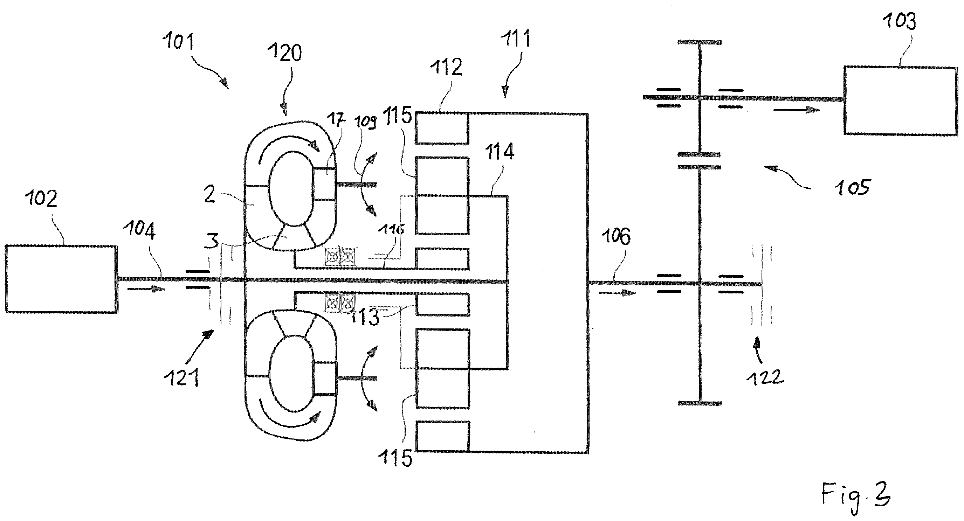

Die Ausgestaltung gemäß der Figur 3 ist hinsichtlich der Lagerung gegenüber der Ausgestaltung der Figur 2 geändert. So kann beispielsweise die Hohlwelle 116, welche das Turbinenrad 3 trägt beziehungsweise an diesem drehfest angeschlossen ist, über Lager, beispielsweise Kugellager, insbesondere Schrägkugellager, im Getriebegehäuse gelagert sein. Diese können Axialkräfte der Turbine aufnehmen. Im gezeigten Ausführungsbeispiel ist ferner ein zusätzliches Axiallager 121 für die Eingangswelle 104 vorgesehen, sowie ein Axiallager 122 für die Ausgangswelle 106.

Das Sonnenrad 113 und die Hohlwelle 116 können über eine Zahnkupplung verbunden sein, die keine Axialkraft überträgt.

Axialkräfte der Arbeitsmaschine 103 werden bevorzugt über eine doppelschrägverzahnte Stirnradstufe des Stirnradgetriebes 105 in das Axiallager 122 der Ausgangswelle 106 geleitet.

Auch das Planetengetriebe 111 ist bevorzugt mit einer Doppelschrägverzahnung versehen, um die Axialkräfte in die Lager übertragen zu können.

### Bezugszeichenliste

- 1: Arbeitsraum
- 2: Pumpenrad
- 3: Turbinenrad
- 4: Arbeitsmediumzulauf
- 5: Arbeitsmediumauslass
- 6: Regelventil
- 7: Bypass
- 8: Vorspannelement
- 9: Ventilkörper
- 10: Ventilsitz
- 11: erster Arbeitsmediumanschluss
- 12: zweiter Arbeitsmediumanschluss
- 13: Arbeitsmediumablauf
- 14: Wirkfläche
- 15: Wirkfläche
- 16: Drosselblende
- 17: Leitrad
- 18: Arbeitsmediumpumpe
- 19: Arbeitsmediumsumpf
- 20: Verstellring
- 21: Antriebswelle
- 22: Abtriebswelle
- 23: Kraft
- 24: Kraft
- 25: Einstellschraube
- 101: Vorrichtung
- 102: Antriebsaggregat
- 103: Arbeitsmaschine
- 104: Eingangswelle
- 105: Stirnradgetriebe
- 106: Ausgangswelle
- 109: Pfeil der Verstellbarkeit
- 111: Planetengetriebe
- 112: Hohlrad
- 113: Sonnenrad
- 114: Planetenträger
- 115: Planet
- 116: Hohlwelle
- 120: Gegenlaufwandler
- 121: Axiallager
- 122: Axiallager

## Patentansprüche

1. Hydrodynamische Maschine, insbesondere hydrodynamischer Wandler,
1.1 mit einem mit einem Arbeitsmedium befüllbaren Arbeitsraum (1), in welchem wenigstens ein beschaufeltes Pumpenrad (2) und ein beschaufeltes Turbinenrad (3) angeordnet sind, um Drehmoment und/oder Antriebsleistung hydrodynamisch vom Pumpenrad (2) auf das Turbinenrad (3) zu übertragen;
1.2 mit einem Arbeitsmediumzulauf (4) zum Zuführen von Arbeitsmedium in den Arbeitsraum (1) und einem Arbeitsmediumauslass (5) zum Abführen von Arbeitsmedium aus dem Arbeitsraum (1);
1.3 mit einem Regelventil (6), das im Arbeitsmediumzulauf (4) oder in einem Bypass (7) für Arbeitsmedium, der vom Arbeitsmediumzulauf (4) abzweigt, vorgesehen ist, wobei mit dem Regelventil (6) die in den Arbeitsraum (1) einströmende Arbeitsmediummenge durch Einstellen eines Strömungsquerschnittes für durch das Regelventil (6) strömendes Arbeitsmedium veränderbar ist; wobei
1.4 das Regelventil (6) derart am Arbeitsmediumzulauf (4) und/oder am Arbeitsmediumauslass (5) angeschlossen und betätigt ist, dass der Strömungsquerschnitt des Regelventils (6) in Abhängigkeit des Arbeitsmediumdruckes im Arbeitsmediumzulauf (4) und in Abhängigkeit des Arbeitsmediumdruckes im Arbeitsmediumauslass (5) variabel eingestellt wird;
**dadurch gekennzeichnet, dass**
das Regelventil (6) in dem Bypass (7) angeordnet ist und einen mittels einem Vorspannelement (8) vorgespannten Ventilkörper (9) aufweist, der mit einem Ventilsitz (10) zur Begrenzung und Einstellung des Strömungsquerschnittes zusammenarbeitet, wobei das Vorspannelement (8) in einer Schließrichtung des Regelventils (6) auf den Ventilkörper (9) wirkt, und
der Ventilkörper (9) entgegen der Vorspannkraft des Vorspannelementes (8) in Abhängigkeit des Arbeitsmediumdruckes im Arbeitsmediumzulauf (4) und im Arbeitsmediumauslass (5) kraftbeaufschlagt ist und
dass das Regelventil (6) einen ersten Arbeitsmediumanschluss (11), einen zweiten Arbeitsmediumanschluss (12) und einen Arbeitsmediumablauf (13) aufweist, wobei
der erste Arbeitsmediumanschluss (11) arbeitsmediumleitend mit dem Arbeitsmediumzulauf (4) verbunden ist, der zweite Arbeitsmediumanschluss (12) arbeitsmediumleitend mit dem Arbeitsmediumauslass (5) verbunden ist, der erste Arbeitsmediumanschluss (11) über den Strömungsquerschnitt arbeitsmediumleitend mit dem Arbeitsmediumablauf (13) verbunden ist und der erste Arbeitsmediumanschluss (11) und der zweite Arbeitsmediumanschluss (12) jeweils mit einer eigenen oder einer gemeinsamen Wirkfläche (14, 15) am Ventilkörper (9) arbeitsmediumleitend verbunden sind, um den Ventilkörper (9) entgegen der Vorspannkraft des Vorspannelementes (8) druckzubeaufschlagen.

2. Hydrodynamische Maschine gemäß Anspruch 1, **dadurch gekennzeichnet, dass** das Regelventil (6) einen mittels einem Vorspannelement (8) vorgespannten Ventilkörper (9) aufweist, der mit einem Ventilsitz (10) zur Begrenzung und Einstellung des Strömungsquerschnittes zusammenarbeitet, wobei eine Vorspannkraft des Vorspannelementes (8), insbesondere manuell, veränderbar ist.

3. Hydrodynamische Maschine gemäß einem der Ansprüche 1 oder 2, **dadurch gekennzeichnet, dass** das Regelventil (6) als Kolbenschieberventil ausgeführt ist.

4. Hydrodynamische Maschine gemäß einem der Ansprüche 1 bis 3, **dadurch gekennzeichnet, dass** das Vorspannelement (8) als Druckfeder ausgeführt ist.

5. Hydrodynamische Maschine gemäß der Ansprüche 1 bis 4, **dadurch gekennzeichnet, dass** die Druckfeder auf einer ersten Seite des als Kolben ausgeführten Ventilkörpers (9) angreift und die gemeinsame Wirkfläche oder die Wirkflächen (14, 15) auf einer hierzu entgegengesetzten Seite des Ventilkörpers (9) vorgesehen ist/sind.

6. Hydrodynamische Maschine gemäß einem der Ansprüche 1 bis 5, **dadurch gekennzeichnet, dass** im Arbeitsmediumablauf (13) eine Drosselblende (16) vorgesehen ist.

7. Hydrodynamische Maschine gemäß einem der Ansprüche 1 bis 6, **dadurch gekennzeichnet, dass** die hydrodynamische Maschine als hydrodynamischer Wandler ausgeführt ist, der im Arbeitsraum (1) neben dem wenigstens einen Pumpenrad (2) und Turbinenrad (3) wenigstens ein beschaufeltes Leitrad (17) aufweist.

8. Hydrodynamische Maschine gemäß Anspruch 7, **dadurch gekennzeichnet, dass** der hydrodynamische Wandler als Stellwandler ausgeführt ist, mit einem Stellglied, mit welchem ein Drehmomentverhältnis des am Pumpenrad (2) und Turbinenrad (3) anliegenden Drehmomentes veränderbar ist, wobei das Stellglied durch gegenüber einer Strömung des Arbeitsmediums im Arbeitsraum (1) verstellbare Schaufeln des Pumpenrades (2) und/oder des Leitrades (17) gebildet wird.

9. Antriebsstrang mit einer hydrodynamischen Maschine gemäß einem der Ansprüche 1 bis 8, mit einer Arbeitsmediumversorgung, die eine Arbeitsmediumpumpe (18) aufweist, wobei die Arbeitsmediumpumpe (18) mit einer Druckseite arbeitsmediumleitend am Arbeitsmediumzulauf (4) angeschlossen ist, um die hydrodynamische Maschine mit druckbeaufschlagtem Arbeitsmedium zu versorgen, mit einem Arbeitsmediumsumpf (19), aus welchem die Arbeitsmediumpumpe (18) zumindest mittelbar mit einer Saugseite angeschlossen ist, wobei der Bypass (7) mit dem Regelventil (6) unmittelbar oder mittelbar im Arbeitsmediumsumpf (19) mündet.

10. Antriebsstrang gemäß Anspruch 9, **dadurch gekennzeichnet, dass** die hydrodynamische Maschine in einem hydrodynamischen Leistungszweig vorgesehen ist, dem ein rein mechanischer Leistungszweig in Richtung des Antriebsleistungsflusses parallel geschaltet ist, wobei ein als Planetengetriebe (111) ausgebildetes Überlagerungsgetriebe, umfassend ein Hohlrad (112), ein Sonnenrad (113) sowie einen Planetenträger (114) mit mehreren Planeten (115), vorgesehen ist, das die mit dem hydrodynamischen Leistungszweig und dem rein mechanischen Leistungszweig übertragene Antriebsleistung überlagert und einer Ausgangswelle (106) zuführt.

11. Antriebsstrang gemäß einem der Ansprüche 9 oder 10, **dadurch gekennzeichnet, dass** dieser ferner ein Antriebsaggregat (102) aufweist, das mit konstanter Drehzahl umläuft, sowie eine Arbeitsmaschine (103), die mit variabler Drehzahl umläuft und mit der Ausgangswelle (106) zumindest mittelbar verbunden ist.

## Claims

1. Hydrodynamic machine, in particular hydrodynamic converter,
1.1 having a working chamber (1) which is able to be filled with a working medium, and in which at least one bladed pump wheel (2) and one bladed turbine wheel (3) are arranged, in order for torque and/or drive power to be transmitted hydrodynamically from the pump wheel (2) to the turbine wheel (3);
1.2 having a working medium inflow (4) for feeding working medium into the working chamber (1) and having a working medium outlet (5) for discharging working medium from the working chamber (1);
1.3 having a regulating valve (6) which is provided in the working medium inflow (4) or in a bypass (7) for working medium, which bypass branches off from the working medium inflow (4), wherein, by way of the regulating valve (6), the quantity of working medium flowing into the working chamber (1) is able to be varied by setting of a flow cross section for working medium flowing through the regulating valve (6); wherein
1.4 the regulating valve (6) is connected to the working medium inflow (4) and/or to the working medium outlet (5), and is actuated, in such a way that the flow cross section of the regulating valve (6) is set variably in a manner dependent on the working medium pressure in the working medium inflow (4) and in a manner dependent on the working medium pressure in the working medium outlet (5);
**characterized in that**
the regulating valve (6) is arranged in the bypass (7) and has a valve body (9) which is preloaded by means of a preload element (8) and which interacts with a valve seat (10) for delimitation and setting of the flow cross section, wherein the preload element (8) acts on the valve body (9) in a closing direction of the regulating valve (6), and
the valve body (9) is subjected to force counter to the preload force of the preload element (8) in a manner dependent on the working medium pressure in the working medium inflow (4) and in the working medium outlet (5), and
**in that** the regulating valve (6) has a first working medium port (11), a second working medium port (12) and a working medium drain (13), wherein
the first working medium port (11) is connected in a working medium-conducting manner to the working medium inflow (4), the second working medium port (12) is connected in a working medium-conducting manner to the working medium outlet (5), the first working medium port (11) is connected in a working medium-conducting manner via the flow cross section to the working medium drain (13), and the first working medium port (11) and the second working medium port (12) are each connected in a working medium-conducting manner to a separate or a common effective surface (14, 15) on the valve body (9) in order for the valve body (9) to be subjected to force counter to the preload force of the preload element (8).

2. Hydrodynamic machine according to Claim 1, **characterized in that** the regulating valve (6) has a valve body (9) which is preloaded by means of a preload element (8) and which interacts with a valve seat (10) for delimitation and setting of the flow cross section, wherein a preload force of the preload element (8) is able to be varied, in particular manually.

3. Hydrodynamic machine according to either of Claims 1 and 2, **characterized in that** the regulating valve (6) is in the form of a piston slide valve.

4. Hydrodynamic machine according to one of Claims 1 to 3, **characterized in that** the preload element (8) is in the form of a compression spring.

5. Hydrodynamic machine according to one of Claims 1 to 4, **characterized in that** the compression spring acts on a first side of the valve body (9), which is in the form of a piston, and the common effective surface or the effective surfaces (14, 15) is/are provided on an oppositely facing side of the valve body (9) in relation to said first side.

6. Hydrodynamic machine according to one of Claims 1 to 5, **characterized in that** an orifice plate (16) is provided in the working medium drain (13).

7. Hydrodynamic machine according to one of Claims 1 to 6, **characterized in that** the hydrodynamic machine is in the form of a hydrodynamic converter, which, in addition to the at least one pump wheel (2) and turbine wheel (3), has at least one bladed stator (17) in the working chamber (1).

8. Hydrodynamic machine according to Claim 7, **characterized in that** the hydrodynamic converter is in the form of an adjustable converter, having an adjustable member by way of which a torque ratio of the torque prevailing at the pump wheel (2) and turbine wheel (3) is able to be varied, wherein the adjustable member is formed by blades of the pump wheel (2) and/or of the stator (17), which blades are able to be adjusted in relation to a flow of the working medium in the working chamber (1).

9. Drive train with a hydrodynamic machine according to one of Claims 1 to 8, having a working medium supply (18) which has a working medium pump (18), wherein, at a pressure side, the working medium pump (18) is connected in a working medium-conducting manner to the working medium inflow (4) in order for pressurized working medium to be supplied to the hydrodynamic machine, having a working medium sump (19) from which the working medium pump (18) is connected at least indirectly at a suction side, wherein the bypass (7), with the regulating valve (6), opens directly or indirectly into the working medium sump (19).

10. Drive train according to Claim 9, **characterized in that** the hydrodynamic machine is provided in a hydrodynamic power branch, to which a purely mechanical power branch is connected in parallel in the direction of the drive power flow, wherein a superposition transmission in the form of a planetary transmission (111), comprising an internal gear (112), a sun gear (113), and a planet carrier (114) with multiple planets (115), is provided and provides in a superposed manner, and feeds to an output shaft (106), the drive power transmitted by way of the hydrodynamic power branch and by way of the purely mechanical power branch.

11. Drive train according to either of Claims 9 and 10, **characterized in that** this furthermore has a drive assembly (102), which has constant rotational speed, and a working machine (103), which has variable rotational speed and is connected at least indirectly to the output shaft (106).

## Revendications

1. Machine hydrodynamique, en particulier convertisseur hydrodynamique, comprenant 1.1 un espace de travail (1) pouvant être rempli avec un fluide de travail et dans lequel au moins une roue de pompe à aubes (2) et une roue de turbine à aubes (3) sont disposées pour transmettre de manière hydrodynamique un couple de rotation et/ou une puissance d'entraînement de la roue de pompe (2) à la roue de turbine (3) ;
1.2 une arrivée de fluide de travail (4) permettant d'amener un fluide de travail dans l'espace de travail (1) et une sortie de fluide de travail (5) permettant d'évacuer un fluide de travail de l'espace de travail (1) ;
1.3 une soupape de régulation (6) qui est prévue dans l'arrivée de fluide de travail (4) ou dans une dérivation (7) pour le fluide de travail qui forme un embranchement avec l'arrivée de fluide de travail (4), la soupape de régulation (6) permettant de modifier la quantité de fluide de travail affluant dans l'espace de travail (1) par un réglage d'une section transversale d'écoulement pour le fluide de travail traversant la soupape de régulation (6) ; dans laquelle
1.4 la soupape de régulation (6) est raccordée à l'arrivée de fluide de travail (4) et/ou à la sortie de fluide de travail (5) et actionnée de telle sorte que la section transversale d'écoulement de la soupape de régulation (6) est réglée de manière variable en fonction de la pression de fluide de travail dans l'arrivée de fluide de travail (4) et en fonction de la pression de fluide de travail dans la sortie de fluide de travail (5) ;
**caractérisée en ce que**
la soupape de régulation (6) est disposée dans la dérivation (7) et présente un corps de soupape (9) précontraint au moyen d'un élément de précontrainte (8) et qui coopère avec un siège de soupape (10) pour limiter et régler la section transversale d'écoulement, l'élément de précontrainte (8) agissant sur le corps de soupape (9) dans une direction de fermeture de la soupape de régulation (6), et
le corps de soupape (9) est soumis à une force à l'encontre de la force de précontrainte de l'élément de précontrainte (8) en fonction de la pression de fluide de travail dans l'arrivée de fluide de travail (4) et dans la sortie de fluide de travail (5), et
**en ce que** la soupape de régulation (6) présente un premier raccord de fluide de travail (11), un deuxième raccord de fluide de travail (12) et une évacuation de fluide de travail (13), dans laquelle
le premier raccord de fluide de travail (11) est relié en conduction de fluide de travail à l'arrivée de fluide de travail (4), le deuxième raccord de fluide de travail (12) est relié en conduction de fluide de travail à la sortie de fluide de travail (5), le premier raccord de fluide de travail (11) est relié par la section transversale d'écoulement en conduction de fluide de travail à l'écoulement de fluide de travail (13), et le premier raccord de fluide de travail (11) et le deuxième raccord de fluide de travail (12) sont reliés en conduction de fluide de travail respectivement à une surface active propre ou à une surface active commune (14, 15) sur le corps de soupape (9) afin de soumettre le corps de soupape (9) à une pression à l'encontre de la force de précontrainte de l'élément de précontrainte (8).

2. Machine hydrodynamique selon la revendication 1, **caractérisée en ce que** la soupape de régulation (6) présente un corps de soupape (9) précontraint à l'aide d'un élément de précontrainte (8) et qui coopère avec un siège de soupape (10) pour limiter et régler la section transversale d'écoulement, une force de précontrainte de l'élément de précontrainte (8) pouvant être variée, en particulier manuellement.

3. Machine hydrodynamique selon l'une quelconque des revendications 1 et 2, **caractérisée en ce que** la soupape de régulation (6) est réalisée sous forme de robinet à piston.

4. Machine hydrodynamique selon l'une quelconque des revendications 1 à 3, **caractérisée en ce que** l'élément de précontrainte (8) est réalisé sous forme de ressort de pression.

5. Machine hydrodynamique selon les revendications 1 à 4, **caractérisée en ce que** le ressort de pression attaque sur un premier côté du corps de soupape (9) réalisé sous forme de piston, et la ou les surfaces actives communes (14, 15) sont prévues sur un côté du corps de soupape (9), opposé à celui-ci.

6. Machine hydrodynamique selon l'une quelconque des revendications 1 à 5, **caractérisée en ce qu'**un diaphragme de mesure (16) est prévu dans l'évacuation de fluide de travail (13).

7. Machine hydrodynamique selon l'une quelconque des revendications 1 à 6, **caractérisée en ce que** la machine hydrodynamique est réalisée sous la forme d'un convertisseur hydrodynamique qui présente dans l'espace de travail (1) au moins une roue directrice à aubes (17) en plus de ladite au moins une roue de pompe (2) et une roue de turbine (3).

8. Machine hydrodynamique selon la revendication 7, **caractérisée en ce que** le convertisseur hydrodynamique est réalisé sous forme de convertisseur de réglage, doté d'un actionneur qui permet de modifier un rapport de couple de rotation du couple de rotation appliqué à la roue de pompe (2) et à la roue de turbine (3), l'actionneur étant formé par des aubes de la roue de pompe (2) et/ou de la roue directrice (17), réglables par rapport à un écoulement du fluide de travail dans l'espace de travail (1).

9. Chaîne cinématique comprenant une machine hydrodynamique selon l'une quelconque des revendications 1 à 8, comprenant une alimentation en fluide de travail qui présente une pompe à fluide de travail (18), la pompe à fluide de travail (18) étant côté refoulement raccordée en conduction de fluide de travail à l'arrivée de fluide de travail (4) pour alimenter la machine hydrodynamique en fluide de travail sous pression, comprenant un réservoir à fluide de travail (19) à partir duquel la pompe à fluide de travail (18) est raccordée au moins indirectement côté admission, la dérivation (7) avec la soupape de régulation (6) débouchant directement ou indirectement sur le réservoir à fluide de travail (19).

10. Chaîne cinématique selon la revendication 9, **caractérisée en ce que** la machine hydrodynamique est prévue dans une branche de puissance hydrodynamique à laquelle une branche de puissance purement mécanique est connectée en parallèle en direction du flux de puissance d'entraînement, dans laquelle un réducteur différentiel réalisé sous forme d'engrenage planétaire (111) est prévu, comprenant une couronne (112), une roue solaire (113) ainsi qu'un porte-satellites (114) doté de plusieurs satellites (115) qui superpose la puissance d'entraînement transmise par la branche de puissance hydrodynamique et la branche de puissance purement mécanique et l'amène à un arbre de sortie (106) .

11. Chaîne cinématique selon l'une quelconque des revendications 9 et 10, **caractérisée en ce qu'**elle présente en outre un groupe générateur (102) qui tourne à une vitesse de rotation constante, ainsi qu'une machine de travail (103) qui tourne à une vitesse de rotation variable et est reliée au moins indirectement à l'arbre de sortie (106).
